# FASCICULE DE BREVET EUROPEEN

(11) **EP 1 964 193 B1**
(45) Date de publication et mention de la délivrance du brevet: **17.05.2017**
(21) Numéro de dépôt: 06841577.7
(22) Date de dépôt: 21.12.2006
(51) Int. Cl.: H01M 4/38, H01M 4/134, H01M 4/62, H01M 4/36, C01B 33/02, B82Y 30/00, B82Y 40/00, C01B 32/05, H01M 10/052

(54) **MATERIAU A BASE DE NANOTUBES DE CARBONE ET DE SILICIUM UTILISABLE DANS DES ELECTRODES NEGATIVES POUR ACCUMULATEUR AU LITHIUM**
MATERIAL AUF DER BASIS VON KOHLENSTOFF- UND SILICIUM-NANORÖHREN, DIE IN NEGATIVELEKTRODEN FÜR LITHIUMBATTERIEN VERWENDET WERDEN KÖNNEN
MATERIAL BASED ON CARBON AND SILICON NANOTUBES THAT CAN BE USED IN NEGATIVE ELECTRODES FOR LITHIUM BATTERIES

(30) Priorité: 23.12.2005 FR 0513261
(43) Date de publication de la demande: 03.09.2008
(73) Titulaire: Commissariat à l'Énergie Atomique et aux Énergies Alternatives, 75015 Paris (FR)
(72) Inventeur: PATOUX, Sébastien, F-38600 Fontaine (FR); LE CRAS, Frédéric, F-38470 Notre Dame De L'Osier (FR)
(74) Mandataire: Ilgart, Jean-Christophe
(86) Numéro de dépôt international: PCT/EP2006/070121
(87) Numéro de publication internationale: WO 2007/071778

(56) Documents cités:
- WO-A-2004/037714
- WO-A-2005/022666
- WO-A1-98/05920
- US-A1- 2003 003 364
- US-A1- 2003 099 883
- US-A1- 2004 126 659
- US-A1- 2004 131 937
- LI H ET AL: "The crystal structural evolution of nano-Si anode caused by lithium insertion and extraction at room temperature" SOLID STATE IONICS, NORTH HOLLAND PUB. COMPANY. AMSTERDAM, NL, vol. 135, no. 1-4, 1 novembre 2000 (2000-11-01), pages 181-191, XP004221546 ISSN: 0167-2738
- KABIR M S ET AL: "Plasma-enhanced chemical vapour deposition growth of carbon nanotubes on different metal underlayers; Plasma-enhanced CVD growth of carbon nanotubes on different metal underlayers" NANOTECHNOLOGY, IOP, BRISTOL, GB, vol. 16, no. 4, 1 avril 2005 (2005-04-01), pages 458-466, XP020090998 ISSN: 0957-4484
- SEEGER T ET AL: "SiOx-coating of carbon nanotubes at room temperature" CHEMICAL PHYSICS LETTERS, NORTH-HOLLAND, AMSTERDAM, NL, vol. 339, no. 1-2, 4 mai 2001 (2001-05-04), pages 41-46, XP002207105 ISSN: 0009-2614
- E. A. WHITSITT AND AL: "Silica coated single walled carbon nanotubes" NANO LETTERS, vol. 3, no. 6, 2003, pages 775-778, XP002399869

## Description

### DOMAINE TECHNIQUE

La présente invention a trait à un nouveau matériau à base de nanotubes de carbone et de silicium.

La présente invention a trait également à une électrode négative comprenant un tel matériau destinée à être incorporée dans un accumulateur au lithium.

Le domaine général de l'invention peut être défini comme celui des accumulateurs au lithium.

Les accumulateurs au lithium sont de plus en plus utilisés comme source d'énergie autonome, en particulier, dans les équipements électroniques portables (tels que les téléphones mobiles, les ordinateurs portables, l'outillage..etc), où ils remplacent progressivement les accumulateurs nickel-cadmium (NiCd) et nickel-hydrure métallique (NiMH). Ils sont également très utilisés pour fournir l'alimentation en énergie nécessaire aux nouvelles microapplications, telles que les cartes à puce, les capteurs ou autres systèmes électromécaniques.

Les accumulateurs au lithium du type lithium-ion commerciaux présentent habituellement une tension nominale de 3,7 volts, une autodécharge extrêmement faible et permettent actuellement le stockage d'environ 160-180 Wh/kg et 420-500 Wh/kg dans une gamme de température de fonctionnement étendue (-20°C à +65°C) .

Ces accumulateurs au lithium fonctionnent sur le principe d'insertion-désinsertion (ou intercalation-désintercalation) du lithium selon le principe suivant.

Lors de la décharge de l'accumulateur, le lithium désinséré de l'électrode négative sous forme ionique Li⁺ migre à travers l'électrolyte conducteur ionique et vient s'intercaler dans le réseau cristallin du matériau actif de l'électrode positive. Le passage de chaque ion Li⁺ dans le circuit interne de l'accumulateur est exactement compensé par le passage d'un électron dans le circuit externe, générant ainsi un courant électrique. La densité d'énergie massique libérée par ces réactions est à la fois proportionnelle à la différence de potentiel entre les deux électrodes et à la quantité de lithium qui se sera intercalé dans le matériau actif de l'électrode positive.

Lors de la charge de l'accumulateur, les réactions se produisant au sein de l'accumulateur sont les réactions inverses de la décharge, à savoir que :
- l'électrode négative va insérer du lithium dans le réseau cristallin du matériau la constituant ;
- l'électrode positive va libérer du lithium.

De part ce principe de fonctionnement, les accumulateurs au lithium nécessitent deux composés d'insertion différents à l'électrode négative et à l'électrode positive.

L'électrode positive est généralement à base d'oxyde lithié de métal de transition :
- du type oxyde lamellaire de formule LiMO₂, où M désigne le Co, Ni, Mn, Al et des mélanges de ceux-ci, tel que LiCoO₂, LiNiO₂, Li (Ni, Co, Mn, Al) O₂ ; ou
- du type oxyde de structure spinelle, tel que LiMn₂O₄.

L'électrode négative peut être à base d'un matériau carboné, et en particulier à base de graphite.

Le graphite présente une capacité spécifique théorique de l'ordre de 372 mAh/g (correspondant à la formation de l'alliage LiC₆) et une capacité spécifique pratique de l'ordre de 320 mAh/g. Toutefois, le graphite présente une forte irréversibilité lors de la première charge, une perte continue de capacité en cyclage et une limitation cinétique rédhibitoire en cas de régime de charge/décharge élevé (par exemple, pour un régime de charge C/2).

En vue d'améliorer les propriétés d'insertion du lithium dans l'électrode négative, des chercheurs ont axé leurs efforts sur la recherche de nouveaux matériaux d'électrode.

Ainsi, ils ont découvert que des matériaux ou éléments susceptibles de former un alliage avec le lithium sont à même de constituer d'excellentes alternatives à l'utilisation du graphite.

C'est ainsi qu'il a été mis en évidence que l'utilisation du silicium dans une électrode négative permettait d'augmenter significativement la capacité spécifique de l'électrode négative liée à l'insertion du lithium dans celle-ci, laquelle est de 320 mAh/g pour une électrode en graphite et de 3578 mAh/g pour une électrode à base de silicium (correspondant à la formation de l'alliage Li₁₅Si₄ lors de l'insertion à température ambiante du lithium dans le silicium). Ainsi, par le biais de prévisions simples, il est possible d'envisager un gain d'environ 40 et 35%, respectivement en énergie volumique et en énergie massique, si l'on substitue le graphite par du silicium dans un accumulateur classique de la filière « lithium-ion ». Par ailleurs, la fenêtre de potentiel de fonctionnement de l'alliage lithium-silicium de formule Li₁₅Si₄ (0,4-0,05 V/ Li-Li⁺) plus élevée que celle du graphite, permet d'éviter la formation d'un dépôt de lithium métallique et les risques associés, tout en laissant la possibilité de procéder à des charges plus rapides. De plus, il est établi que la réaction de formation de l'alliage lithium-silicium, conduisant à une capacité très élevée (de l'ordre de 3578 mAh/g), est réversible.

Néanmoins, l'utilisation du silicium dans une électrode négative d'un accumulateur au lithium pose un certain nombre de problèmes.

En particulier, lors de la réaction de formation de l'alliage silicium-lithium (correspondant à l'insertion du lithium dans l'électrode négative en processus de charge), l'expansion volumique entre la phase délithiée et la phase lithiée peut atteindre 280%. Cette forte expansion, suivie d'une contraction de même amplitude (correspondant à la désinsertion du lithium dans l'électrode négative lors du processus de décharge) entraîne rapidement des dommages mécaniques irréversibles de l'électrode et à terme, une perte de contact de l'électrode négative avec le collecteur. de courant sous-jacent. Il s'ensuit une perte rapide de la capacité en cyclage.

De plus, bien que présentant des propriétés d'insertion du lithium intéressantes, le silicium ne peut être utilisé tel quel du fait de sa faible conductivité électrique, ce qui a pour effet de limiter cinétiquement l'utilisation de l'accumulateur.

Les chercheurs se sont fixé comme but de proposer des matériaux d'électrode négative à base de silicium surmontant au moins en partie ces inconvénients.

Ainsi, il est proposé dans US 2003/0129497 une électrode négative à base de silicium recouvert d'un film de carbone amorphe ou d'un carbone du type diamant. Dans ce document, le film de carbone joue un rôle de protection contre la formation de dendrites (qui occasionnent des courts-circuits) et contre la dégradation de l'électrode. Ce film recouvre donc le dispositif et lors de la réaction, l'insertion du lithium se fera, dans un premier temps, dans le carbone comme dans une électrode classique sans les performances du silicium.

US 2004/0126659 décrit des matériaux à base de silicium et, en particulier, des substrats en nickel/cuivre ou en fibres de verre revêtus d'une couche métallique recouvert d'un film de silicium. WO9805920 décrit un matériau comprenant des nanotubes de carbone sur lesquels est déposé un film sensiblement continu de particules manométriques de silicium. Les inventeurs se sont fixé comme but d'élaborer un nouveau matériau utilisable dans une électrode négative pour accumulateur au lithium, lequel permet de surmonter les inconvénients des matériaux utilisés dans l'art antérieur, à savoir :
- les problèmes de dégradation mécanique liés au phénomène de dilatation/contraction résultant de l'insertion/désinsertion du lithium ;
- les problèmes de conductivité électrique.

### EXPOSÉ DE L'INVENTION

Ainsi, l'invention a trait à une électrode négative pour accumulateur au lithium comprenant des nanotubes de carbone, à la surface de chacun desquels est déposé un film sensiblement continu de particules nanométriques de silicium.

Les matériaux de l'invention présentent les avantages suivantes :
- les nanotubes de carbone présentent une conductivité électronique satisfaisante qui permet d'améliorer les performances électrochimiques du matériau les incorporant ;
- les nanotubes de carbone présentent de bonnes capacités de déformation élastique, ce qui permet d'absorber l'expansion de volume du film de silicium, lorsque celui-ci insère du lithium ;
- il est possible de régler la quantité de nanotubes de carbone au sein du matériau, de façon à ménager des espaces vides suffisants pour encaisser les déformations liées au phénomène d'insertion-désinsertion du lithium, lorsque ce matériau est utilisé dans des accumulateurs au lithium ;
- le fait que le silicium soit déposé sous forme de films à la surface des nanotubes de carbone contribue à augmenter (par exemple, d'un facteur 1000) la surface active de silicium par rapport au cas où la partie carbonée et la partie silicium se présenteraient sous forme de deux couches distinctes superposées, ce qui permet l'insertion d'une plus grande quantité de lithium.

Le film de particules nanométriques de silicium présente avantageusement une épaisseur allant de 1 à 50 nm et est avantageusement une monocouche et est sensiblement continu.

Par film sensiblement continu, on entend généralement un film formant une gaine autour de chacun des nanotubes de carbone.

Les particules nanométriques de silicium présentent généralement une taille de particules allant de 1 à 50 nm.

Avantageusement, les nanotubes sont disposés de manière sensiblement parallèle entre eux.

Généralement, les nanotubes de carbone sont fixés par une de leurs extrémités à un substrat, de préférence, de manière sensiblement perpendiculaire par rapport à ce substrat.

Ce substrat est avantageusement conducteur de l'électricité.

D'un point de vue pratique, ce matériau peut être réalisé par un procédé comprenant successivement les étapes suivantes :
- une étape de croissance de nanotubes de carbone;
- une étape de dépôt sur la surface de ces nanotubes d'un film de particules nanométriques de silicium.

Généralement, l'étape de croissance des nanotubes de carbone s'effectue sur un substrat, de préférence conducteur de l'électricité. Il peut donc s'agir d'un substrat métallique, par exemple, en cuivre, en titane ou en nickel.

Les nanotubes de carbone peuvent être préparés selon différentes méthodes, parmi lesquelles l'on peut citer :
- les procédés haute température utilisant une source d'énergie choisie parmi le laser, l'arc électrique et en utilisant une cible carbonée ;
- les procédés moyenne température, basés sur la décomposition d'un gaz hydrocarboné sur un catalyseur métallique.

Pour les procédés haute température, la source énergétique (arc électrique ou ablation laser) sert à vaporiser un élément principalement constitué de carbone, tel que le graphite, communément appelé cible. La forte concentration d'énergie générée par la source permet d'élever la température de façon locale, à proximité de la cible, au-delà de 3000°C. A partir du moment où la cible se vaporise, il se crée un plasma contenant des particules de carbone de dimensions atomiques. Ces particules réagissent entre elles au sein du plasma pour former des nanotubes de carbone.

Pour les procédés moyenne température basés sur la décomposition d'un gaz hydrocarboné sur un catalyseur métallique, on peut citer plus particulièrement les procédés du type CVD conventionnel (CVD signifiant Chemical Vapour Deposition pour Dépôt Chimique en Phase Vapeur) se déroulant, de préférence, en lit fluidisé. Le gaz hydrocarboné peut être l'acétylène, le xylène, le méthane, l'éthylène, le propylène. Dans des conditions particulières de pression et de température, le gaz entrant en contact avec les particules métalliques de catalyseur se décompose et les particules de carbone réagissent entre elles pour former des nanotubes de carbone, à partir de l'emplacement des particules métalliques de catalyseur. Les particules métalliques de catalyseur peuvent être à base de Ni, Co, Fe et sont déposées sur le substrat, par exemple en silicium, silice, cuivre, titane, nickel, éventuellement recouvert d'une couche barrière (par exemple, en nitrure de titane, en silice) pour éviter une diffusion du catalyseur dans le substrat. De préférence, le substrat est en un élément métallique choisi parmi le cuivre, le titane et le nickel. Ces particules métalliques de catalyseur sont disposées, de préférence, selon un arrangement prédéterminé, en fonction de la quantité de nanotubes de carbone envisagé et l'espacement souhaité entre les nanotubes de carbone. Pour contrôler le dépôt des particules métalliques de catalyseur sur le substrat, il peut être envisagé, préalablement au dépôt de ces particules, de masquer physiquement ou chimiquement, selon le principe de la photolithographie, les parties du substrat que l'on souhaite dépourvues de nanotubes de carbone à l'issue du procédé.

Par contre, si une organisation précise des particules métalliques de catalyseur à la surface du substrat n'est pas nécessaire, il est possible de déposer celles-ci par pulvérisation cathodique.

De façon générale, la température de réaction ne dépasse pas 900°C.

Une fois que les nanotubes ont été synthétisés, il peut être envisageable de procéder à une étape d'élimination du(des) catalyseur(s), afin que celui-ci n'interagisse pas avec le lithium lorsque ce matériau sera utilisé dans une électrode négative pour accumulateur au lithium. L'élimination des particules métalliques de catalyseur peut se faire par attaque chimique à l'acide nitrique suivi, dans certains cas, d'un traitement thermique à haute température (par exemple, de 700°C à 2000°C), afin d'éliminer les particules de catalyseur restantes, de même que d'éventuelles impuretés de surface.
Il peut également être envisageable d'éliminer le substrat, notamment lorsque celui-ci est en un matériau non métallique.

Les procédés moyenne température basés sur l'utilisation de particules de catalyseur sont particulièrement avantageux pour la mise en oeuvre de l'invention, dans la mesure où ils permettent une sélectivité dans l'arrangement des nanotubes de carbone, en jouant sur la disposition des particules métalliques de catalyseurs sur le substrat, la croissance des nanotubes se faisant uniquement à partir de l'emplacement de ces particules. Il est ainsi possible de régler la porosité du matériau de l'invention en jouant sur le taux de particules métalliques de catalyseurs et la disposition de ceux-ci.

Suite à la formation des nanotubes de carbone, un film de particules nanométriques de silicium est déposé à la surface des nanotubes de carbone.

Ce dépôt peut se faire, par exemple, par dépôt chimique en phase vapeur à partir de précurseurs silylés, tels que le silane SiH₄ (connu sous l'abréviation « CVD » pour « Chemical Vapor Déposition »), qui permet d'obtenir une répartition uniforme du silicium, ce qui forme ainsi une gaine autour de chaque nanotube.

Selon ce mode de réalisation, le silicium est ainsi déposé à partir de précurseurs gazeux qui réagissent sur un support, qui est chauffé de manière à fournir l'énergie d'activation nécessaire au déclenchement de la réaction chimique entre le support et les précurseurs silylés gazeux.

En l'occurrence, selon l'invention, le support est constitué par les nanotubes de carbone et les précurseurs silylés gazeux peuvent être des silanes (SiH₄) ou des composés chlorosilanes. La température, à laquelle sont portées les nanotubes de carbone, va généralement de 300 à 600°C.

Au contact des nanotubes de carbone, les précurseurs silylés gazeux, par exemple, du type silane, se décompose selon le schéma réactionnel suivant :

SiH₄(gaz)→ Si(solide) + 2H₂(gaz)

Les paramètres de dépôt seront déterminés avantageusement de façon à obtenir un film de silicium présentant une épaisseur inférieure à 50 nm, ce qui correspond sensiblement au dépôt de quelques monocouches de particules nanométriques de silicium sur les parois externes des nanotubes de carbone.

Le dépôt du film de silicium peut se faire également en solution. Par exemple, on peut effectuer un électrodépôt à partir de SiCl₄ en milieu liquide ionique.

Du fait de ses propriétés intrinsèques, ces matériaux sont mis en oeuvre efficacement dans des électrodes négatives d'accumulateurs au lithium.

Ainsi l'invention a pour objet une électrode comprenant un matériau tel que défini ci-dessus. Avantageusement, ce matériau se présente sous forme de nanotubes de carbone disposés de façon sensiblement parallèle entre eux et de façon sensiblement perpendiculaire par rapport à un substrat conducteur de l'électricité, par exemple, en cuivre, nickel, titane, ce support conducteur de l'électricité jouant le rôle de collecteur de courant de l'électrode négative.

L'utilisation des matériaux de l'invention pour constituer des électrodes négatives pour accumulateur au lithium présente un grand nombre d'avantages.

En effet, les performances électrochimiques du silicium, notamment sa cyclabilité, sont améliorées, lorsqu'il est déposé sous forme de films de particules nanométriques sur des nanotubes de carbone. Une telle amélioration passe par l'aptitude des nanotubes à se déformer réversiblement lors des phénomènes d'insertion-désinsertion de lithium au niveau du film de silicium, ce qui limite ainsi les phénomènes de décrépitude d'électrode habituellement rencontrés avec les électrodes négatives de l'art antérieur.

Il a été notamment démontré, suite à des situations dynamiques moléculaires, que l'angle de courbure maximal (réversible) des nanotubes de carbone, défini comme le plus petit angle entre les tangentes aux deux extrémités du tube courbé, peut atteindre 110° et ce de manière réversible. Les nanotubes de carbone sont donc tout à fait aptes à engranger les déformations générées par le phénomène d'insertion-désinsertion du lithium.

En outre, les nanotubes de carbone présentent une résistance mécanique extrêmement élevée (module de Young d'environ 1 TPa et une résistance à la rupture de l'ordre de 50 GPa). Cette résistance associée à la capacité à se déformer réversiblement et à leur conductivité élevée, fait des nanotubes de carbone le matériau le plus idéal qu'il soit pour les films de particules nanométriques de silicium à l'électrode négative d'accumulateurs au lithium.

De plus, une telle électrode permet d'atteindre une capacité spécifique de l'ordre de 3600 mAh/g, grâce à la formation de l'alliage silicium-lithium Li₁₅Si₄, ce qui correspond à l'incorporation jusqu'à 79% d'atome de lithium dans l'alliage, les capacités d'insertion dans le silicium étant améliorées par le simple fait de déposer celui-ci sous forme d'un film de particules nanométriques sur des nanotubes de carbone.

En plus, les nanotubes de carbone présentent une conductivité électrique élevée par rapport à celle du graphite.

Les électrodes négatives à base du matériau de l'invention présentent ainsi d'excellentes performance en matière de densité d'énergie (capacité spécifique et potentiel) et de puissance (aptitude à répondre à de fortes densités de courant), tout en étant capables d'effectuer plusieurs centaines de cycles de charge/décharge à des régimes soutenus, avec une faible perte de capacité par cycle.

Le matériau peut se présenter sous forme massive dans l'électrode négative ou encore sous forme d'une dispersion dans une matrice comprenant un additif conducteur de l'électricité et/ou un liant organique.

Comme additif conducteur de l'électricité, on peut citer le carbone sous une autre forme que les nanotubes de carbone.

Comme liant organique, on peut citer des polymères tel qu'un polyéther, un polyester, un polymère à base de méthacrylate de méthyle, un polymère à base d'acrylonitrile, un polymère à base de fluorure de vinylidène.

Enfin, l'invention a trait à un accumulateur au lithium comprenant au moins une électrode négative telle que définie ci-dessus. Plus particulièrement, l'accumulateur au lithium appartient à la filière « lithium-ion », c'est-à-dire que le lithium ne se présente jamais dans l'accumulateur sous forme métallique mais fait un va-et-vient entre les deux composés d'insertion du lithium contenus dans les électrodes positive et négative à chaque charge et décharge de l'accumulateur.

L'accumulateur au lithium de l'invention comprend classiquement au moins une cellule électrochimique comprenant :
- une électrode négative telle que définie ci-dessus ;
- une électrode positive ; et
- un séparateur disposé entre ladite électrode négative et ladite électrode positive, lequel séparateur comprend un électrolyte conducteur d'ions lithium.

L'électrode positive peut comprendre un matériau choisi parmi les phosphates lithiés de métaux de transition, les oxydes lithiés de métaux de transition et les mélanges de ceux-ci.

A titre d'exemples de phosphates lithiés utilisables, on peut citer LiFeₓ₁Mn₁₋ₓ₁PO₄ avec 0≤x₁<1.

Ces matériaux présentent une structure de type olivine.

A titre d'exemples d'oxydes lithiés de métaux de transition, on peut citer les oxydes lamellaires LiMO₂ où M désigne le Co, Ni, Mn, Al et des mélanges de ceux-ci, et les oxydes de structure spinelle de type Li₁₊ₓMn₂O₄ avec 0≤x≤0,1.

Le séparateur peut se présenter sous la forme d'un élément poreux contenant un électrolyte liquide conducteur d'ions lithium.

L'élément poreux peut se présenter sous forme d'un polymère, par exemple en polyéthylène ou en polypropylène ou une association des deux.

L'électrolyte liquide comprend par exemple un solvant liquide aprotique, par exemple, du type carbonaté, tels que le carbonate d'éthylène, le carbonate de propylène, le carbonate de diméthyle ou le carbonate de diéthyle, un solvant ou mélange de solvants du type éther, tel que le diméthoxyéthane, le dioxolane, le dioxane, dans lequel est dissous un sel de lithium.

A titre d'exemples, le sel de lithium peut être choisi dans le groupe constitué de LiPF₆, LiClO₄, LiBF₄, LiAsF₆, LiCF₃SO₃, LiN(CF₃SO₂)₃, LiN(C₂F₅SO₂).

## Revendications

1. Electrode négative pour accumulateur au lithium comprenant un matériau comprenant des nanotubes de carbone, à la surface de chacun desquels est déposé un film sensiblement continu de particules nanométriques de silicium.

2. Electrode négative selon la revendication 1, dans laquelle le film présente une épaisseur allant de 1 à 50 nm.

3. Electrode négative selon la revendication 1 ou 2, dans laquelle les nanotubes de carbone sont disposés de manière sensiblement parallèle entre eux.

4. Electrode négative selon l'une quelconque des revendications précédentes, dans laquelle les nanotubes de carbone sont fixés par une de leurs extrémités à un substrat.

5. Electrode négative selon la revendication 4, dans laquelle les nanotubes de carbone sont disposés de manière sensiblement perpendiculaire par rapport au substrat.

6. Electrode négative selon la revendication 4 ou 5, dans laquelle le substrat est conducteur de l'électricité.

7. Accumulateur au lithium comprenant au moins une cellule électrochimique comprenant :
- une électrode négative telle que définie selon l'une quelconque des revendications 1 à 6;
- une électrode positive ;
- un séparateur disposé entre ladite électrode négative et ladite électrode positive,
lequel séparateur comprend un électrolyte conducteur d'ions lithium.

8. Accumulateur au lithium selon la revendication 7, dans lequel l'électrode positive comprend un matériau choisi parmi les phosphates lithiés de métaux de transition, les oxydes lithiés de métaux de transition et les mélanges de ceux-ci.

9. Accumulateur au lithium selon la revendication 7 ou 8, dans lequel l'électrode positive comprend un matériau choisi parmi LiFeₓ₁Mn₁₋ₓ₁PO₄ avec 0≤x₁≤1, LiMO₂, où M désigne le Co, Ni, Mn, Al et des mélanges de ceux-ci.

10. Accumulateur au lithium selon l'une quelconque des revendications 7 à 9, dans lequel le séparateur se présente sous la forme d'un élément poreux contenant un électrolyte liquide conducteur d'ions lithium.

11. Accumulateur au lithium selon la revendication 10, dans lequel l'électrolyte liquide conducteur d'ions lithium comprend un solvant liquide aprotique, dans lequel est dissous un sel de lithium.

12. Accumulateur au lithium selon la revendication 11, dans lequel le solvant liquide aprotique est un solvant carbonaté.

13. Accumulateur au lithium selon la revendication 12, dans lequel le solvant carbonate est choisi parmi le carbonate d'éthylène, le carbonate de propylène, le carbonate de diméthyle ou le carbonate de diéthyle.

14. Accumulateur au lithium selon la revendication 11, 12 ou 13, dans lequel le sel de lithium est choisi parmi LiPF₆, LiClO₄, LiBF₄, LiAsF₆, LiCF₃SO₃, LiN(CF₃SO₂)₃, LiN(C₂F₅SO₂).

## Patentansprüche

1. Negative Elektrode für eine Lithium-Batterie, enthaltend ein Material mit Kohlenstoffnanoröhren, an deren Oberfläche jeweils ein im Wesentlichen durchgehender Film von Silicium-Nanopartikeln angeordnet ist.

2. Negative Elektrode nach Anspruch 1, wobei der Film eine Materialstärke von 1 bis 50 nm aufweist.

3. Negative Elektrode nach Anspruch 1 oder 2, wobei die Kohlenstoff-Nanoröhren im Wesentlichen parallel zueinander angeordnet sind.

4. Negative Elektrode nach einem der vorangehenden Ansprüche, wobei die Kohlenstoff-Nanoröhren mit einem ihrer Enden an ein Substrat fixiert sind.

5. Negative Elektrode nach Anspruch 4, wobei die Kohlenstoff-Nanoröhren im Wesentlichen senkrecht zu dem Substrat angeordnet sind.

6. Negative Elektrode nach Anspruch 4 oder 5, wobei das Substrat elektrisch leitend ist.

7. Lithium-Batterie mit zumindest einer elektrochemischen Zelle, enthaltend:
- eine negative Elektrode wie nach einem der Ansprüche 1 bis 6 definiert;
- eine positive Elektrode;
- einen Separator, der zwischen der negativen Elektrode und der positiven Elektrode angeordnet ist,
wobei der Separator einen Lithiumionen leitenden Elektrolyten enthält.

8. Lithium-Batterie nach Anspruch 7, wobei die positive Elektrode ein Material enthält, ausgewählt aus Lithiumphosphaten von Übergangsmetallen, Lithiumoxiden von Übergangsmetallen und deren Gemische.

9. Lithium-Batterie nach Anspruch 7 oder 8, wobei die positive Elektrode ein Material enthält, ausgewählt aus LiFeₓ₁Mn₁₋ₓ₁PO₄ mit 0 ≤ x₁ ≤ 1, LiMO₂, worin M bezeichnet: Co, Ni, Mn, Al und deren Gemische.

10. Lithium-Batterie nach einem der Ansprüche 7 bis 9, wobei der Separator in Form eines porösen Elements vorliegt, das einen Lithiumionen leitenden flüssigen Elektrolyten enthält.

11. Lithium-Batterie nach Anspruch 10, wobei der Lithiumionen leitende, flüssige Elektrolyt ein aprotisches, flüssiges Lösungsmittel enthält, in welchem ein Lithiumsalz aufgelöst ist.

12. Lithium-Batterie nach Anspruch 11, wobei das aprotische, flüssige Lösungsmittel ein Carbonat-Lösungsmittel ist.

13. Lithium-Batterie nach Anspruch 12, wobei das Carbonat-Lösungsmittel ausgewählt ist aus Ethylencarbonat, Propylencarbonat, Dimethlycarbonat bzw. Diethylcarbonat.

14. Lithium-Batterie nach Anspruch 11, 12 oder 13, wobei das Lithium-Salz ausgewählt ist aus LiPF₆, LiClO₄, LiBF₄, LiAsF₆, LiCF₃SO₃, LiN(CF₃SO₂)₃, LiN(C₂F₅SO₂).

## Claims

1. Negative electrode for a lithium battery comprising a material comprising carbon nanotubes, deposited at the surface of each of which is a substantially continuous film of nanoscale silicon particles.

2. Negative electrode according to Claim 1, in which the film has a thickness ranging from 1 to 50 nm.

3. Negative electrode according to Claim 1 or 2, in which the carbon nanotubes are positioned substantially parallel to one another.

4. Negative electrode according to any one of the preceding claims, in which the carbon nanotubes are attached to a substrate via one of their ends.

5. Negative electrode according to Claim 4, in which the carbon nanotubes are positioned substantially perpendicular relative to the substrate.

6. Negative electrode according to Claim 4 or 5, in which the substrate is electrically conductive.

7. Lithium battery comprising at least one electrochemical cell comprising:
- a negative electrode such as defined in any one of Claims 1 to 6;
- a positive electrode; and
- a separator placed between said negative electrode and said positive electrode,
which separator comprises a lithium-ion conductive electrolyte.

8. Lithium battery according to Claim 7, in which the positive electrode comprises a material chosen from lithiated transition metal phosphates, lithiated transition metal oxides and mixtures of these.

9. Lithium battery according to Claim 7 or 8, in which the positive electrode comprises a material chosen from LiFe_{x₁}Mn_{1-x₁}PO₄ with 0 ≤ x₁ ≤ 1, LiMO₂ with M being Co, Ni, Mn, Al or mixtures thereof.

10. Lithium battery according to any one of Claims 7 to 9, in which the separator is in the form of a porous component containing a lithium-ion conductive liquid electrolyte.

11. Lithium battery according to Claim 10, in which the lithium-ion conductive liquid electrolyte comprises an aprotic liquid solvent in which a lithium salt is dissolved.

12. Lithium battery according to Claim 11, in which the aprotic liquid solvent is a carbonated solvent.

13. Lithium battery according to Claim 12, in which the carbonated solvent is chosen from ethylene carbonate, propylene carbonate, dimethyl carbonate or diethyl carbonate.

14. Lithium battery according to Claim 11, 12 or 13, in which the lithium salt is chosen from LiPF₆, LiClO₄, LiBF₄, LiAsF₆, LiCF₃SO₃, LiN(CF₃SO₂)₃, LiN (C₂F₅SO₂).
